# EUROPEAN PATENT SPECIFICATION

(11) **EP 1 800 442 B1**
(45) Date of publication and mention of the grant of the patent: **14.11.2012**
(21) Application number: 05786522.2
(22) Date of filing: 22.09.2005
(51) Int. Cl.: H04L 12/56, H04L 12/24, H04L 29/14

(54) **A RESILIENCE SOLUTION FOR TOP TIER BANDWIDTH MANAGERS**
BELASTBARKEITSLÖSUNG FÜR BANDBREITENVERWALTER AUF OBERSTER STUFE
SOLUTION DE RESILIENCE DESTINEE A DES GESTIONNAIRES DE LARGEUR DE BANDE SUPERIEURS

(30) Priority: 12.10.2004 US 617083 P
(43) Date of publication of application: 27.06.2007
(73) Proprietor: NetSocket, Inc., Plano, TX 75025 (US)
(72) Inventor: SCHELEN, Olof, S-945 91 Norrfjärden (SE); BODIN, Ulf, S-954 42 Sunderbyn (SE); JOHANSSON, Joachim, S-954 42 Södra Sunderbyn (SE); NORRGÅRD, Joakim, S-972 32 Lulelå (SE)
(74) Representative: Epping - Hermann - Fischer
(86) International application number: PCT/SE2005/001396
(87) International publication number: WO 2006/041373

(56) References cited:
- WO-A1-03/085514
- WO-A1-2004/051944
- US-A1- 2002 059 316
- US-A1- 2004 082 338
- US-B1- 6 671 704
- CHRIS GALLON ET AL: "Bandwidth Management in Next Generation Packet Networks", INTERNET CITATION, 1 August 2005 (2005-08-01), pages 1-26, XP002522002, Retrieved from the Internet: URL:http://www.msforum.org/techinfo/report s/MSF-TR-ARCH-005-FINAL.pdf [retrieved on 2009-03-31]
- GALLON C. ET AL: 'MSF TECHNICAL REPORT MSF-TR-ARCH-005-FINAL; Bandwidth Management in Next Generation Packet Networks', [Online] August 2005, pages 1 - 26, XP002522002 Retrieved from the Internet: <URL:http://www.msforum.org>

## Description

### Field of the invention

The present invention relates to arrangements for bandwidth management in an IP (Internet Protocol) network. In particular, it relates to a resilience solution for access network bandwidth managers, that is bandwidth managers in an access network.

### Background

A current networking trend is to provide "IP all the way" to wired and wireless units. Some current objectives are to simplify the infrastructure, to support a wide range of applications, and to support diverse user demands on the communication service. To allow this, there is a need for scalable solutions supporting service differentiation and dynamic bandwidth management within IP networks.

The primary goal when the Internet Protocols were designed was to provide an effective technique for interconnecting existing networks. Other important goals were survivability in the face of failure and generality in supporting various services and applications. To reach these goals, the IP protocol suite was designed to provide a connectionless datagram network that does not require signalling and per-flow forwarding state in network elements. It has turned out that the architecture scales to large networks and supports applications making many end-to-end connections (e.g. the World Wide Web).

Traditionally, demanding real-time applications have been built on networks that are vertically optimised for the particular application. This design principle results in networks that are efficient for their purpose, but do not easily support new applications and are in many cases incapable of efficiently multiplexing applications with varying resource demands. It has turned out that the cost of running several different networks in parallel is high.

IP was from the beginning designed to be a general communication solution. IP technology is now recognised to be cheap and appropriate for supporting both traditional data applications and delay-sensitive real-time applications. To provide expected service for real-time applications, logically (and physically) separate IP networks are used. Each IP network serves only a subset of sensitive applications (e.g. IP telephony) with quite predictable bandwidth requirements. By limiting the range of applications, the total bandwidth demand can be predicted; so that the network can be dimensioned using the same traffic models as are used for vertically optimised networks. The benefit of cheap IP equipment is obtained without requiring support for dynamic service provisioning in the IP technology.

Network operators now aim at cutting the overhead cost of maintaining several parallel networks. One current trend is to simplify the infrastructure by running all kinds of applications, with various network service demands, in the same logical IP network (i.e. the Internet). This means that the application heterogeneity in IP networks is increasing.

In the research and standardisation bodies the development of QoS support (Quality of Service) has progressed from providing signalled solutions for the Internet (somewhat resembling the solutions used in vertical networks) to now recognising that more stateless solutions are favourable.

The scalability problems of solutions using per-flow QoS management in routers have resulted in a new approach being taken in the IETF, known as the differentiated services architecture. The objective is to provide scalable QoS support by avoiding per-flow state in routers. The basic idea is that IP packet headers include a small label (known as the diffserv field) that identifies the treatment (per-hop behaviour) that packets should be given by the routers. Consequently, core routers are configured with a few forwarding classes and the labels are used to map packets into these classes. The architecture relies on packet markers and policing functions at the boundaries of the network to ensure that the intended services are provided.

One advantage of differentiated services is that the model preserves the favourable properties that made the Internet successful; it supports scalable and stateless forwarding over interconnected physical networks of various kinds. The standard model is, however, limited to differentiated forwarding in routers and therefore the challenge lies in providing predictable services to end users.

Qualitative services (relatively better than best-effort services, but depending on where the traffic is sent and on the load incurred by others at the time) can be provided by relying only on diffserv support in routers and bandwidth management mechanisms for semi-static admission control and service provisioning.

To provide quantitative (minimum expectation) service, resources must be dynamically administrated by the bandwidth management mechanisms and involve dynamic admission control to make sure that there are sufficient resources in the network to provide the services committed.

The entity performing dynamic admission control is here called a bandwidth manager. This entity keeps track of the available resources by managing a resource map and performs admission control on incoming requests for bandwidths from clients. To perform the admission control the bandwidth manager also stores a history of previously admitted bandwidth reservations. The bandwidth manager takes decisions to admit new requests for bandwidth based on the total amount of available resources, the amount currently reserved by previously reservations and the amount of bandwidth requested. In this specification, it is assumed that the bandwidth managers perform admission control and once a request is admitted, the bandwidth manager is then no longer involved in that request.

The mechanisms should provide accurate bandwidth control both in a top tier and a bottom tier of the network. An example of a top tier is an access network and an example of a bottom tier is a core network. Thus, a bandwidth manager in the access network is in this application referred to as an access network bandwidth manager and a bandwidth manager in the core network is referred to as a core network bandwidth manager.

To handle a very high rate of call admission requests, which may come from services such as IP-telephony, a two-tier architecture is required with access network bandwidth managers in the access network (top tier) and core network bandwidth managers in the core network (bottom tier).

In order to maintain service availability in disaster scenarios where a complete server site may become unavailable a geographical fail-over solution is needed. Since it may not be feasible to continuously synchronize all state to a distant standby bandwidth manager a solution is needed where the number of states to be synchronized is minimized.

US 2002/0059316 A1 deals with a method for recovering from failures affecting a resource manager within a group of resource managers; wherein the resource managers of the group have access to shared resources.

US 6,671,704 B1 deals with a method of providing fault tolerant operation of a transaction processing system in which additional resources can be used in case of insufficient capacities.

### Summary of the invention

Thus, an object with the present invention is to minimize service interruption during a bandwidth manager fail-over by allowing continuous service availability while the call state is synchronizing.

The object above is achieved by the back up access network bandwidth manager defined by the characterising part of claim 1 and by the network defined by the characterising part of claim 11.

Preferred embodiments are defined by the dependent claims.

Thus the back up access network bandwidth manager according to the present invention comprising a copy of the resource map of the access network bandwidth manager which it is backing up and means for synchronizing states with the core network bandwidth manager upon fail-over of the access network bandwidth manager, makes it possible to minimize service interruption during a bandwidth manager fail-over by allowing continuous service availability while the call state is synchronizing.

Thus the network according to the present invention comprising a copy of the resource map of the access network bandwidth manager which it is backing up and means for synchronising states with the core network bandwidth manager upon fail-over of the access network bandwidth manager, makes it possible to minimize service interruption during a bandwidth manager fail-over by allowing continuous service availability while the call state is synchronizing.

According to one embodiment, the back up access network bandwidth manager comprises means for performing fail-over from a failed access network bandwidth manager by IP address takeover, wherein the backup access network bandwidth manager comprises means for taking over the IP address of said failed access network bandwidth manager as the routing protocol in use announce the new route to this IP address.

According to one embodiment, the back up access network bandwidth manager comprises means for performing fail-over from a failed access network bandwidth manager by configuring the clients with a primary and a secondary address.

According to one embodiment, one of the states to be synchronised is the already admitted and active calls call.

According to one embodiment, one of the states to be synchronised is the pre-allocated resources in bulk.

According to one embodiment, the back up access network bandwidth manager comprises a separate connection or a buffer to a client wherein the separate connection or the buffer is adapted to transfer call state synchronization in parallel with normal operation.

According to one embodiment, the back up access network bandwidth manager comprises means for handling new calls immediately while already admitted calls are refreshed at a slower timescale.

According to one embodiment, the back up access network bandwidth manager comprises means for completing full synchronization before dealing with new call attempts.

According to one embodiment, the back up access network bandwidth manager comprises means for skipping synchronization

According to one embodiment, the back up access network bandwidth manager comprises means for re-freshing active calls periodically.

An advantage with the present invention is that no continuous replication of state between the resilient access bandwidth managers according to the present invention is needed since the resource state is synchronized with the core bandwidth manager and the call state is migrated by serving new requests (calls) while the calls that were active will time out.

A further advantage is that the signalling to the core bandwidth manager is minimized by using aggregated bulk reservations and thus avoiding per call synchronization with the core bandwidth manager.

A yet further advantage of the present invention is that the synchronization of the resources through the core is fast since the reservations are aggregated into a few bulk reservations. This allows fast recovery of the resource map and continuous service availability.

### Brief description of the drawings

**Figure 1a** illustrates a network wherein the present invention may be implemented.
**Figure 1b** illustrates the normal operation with an active access bandwidth manager for call admission control according to the present invention.

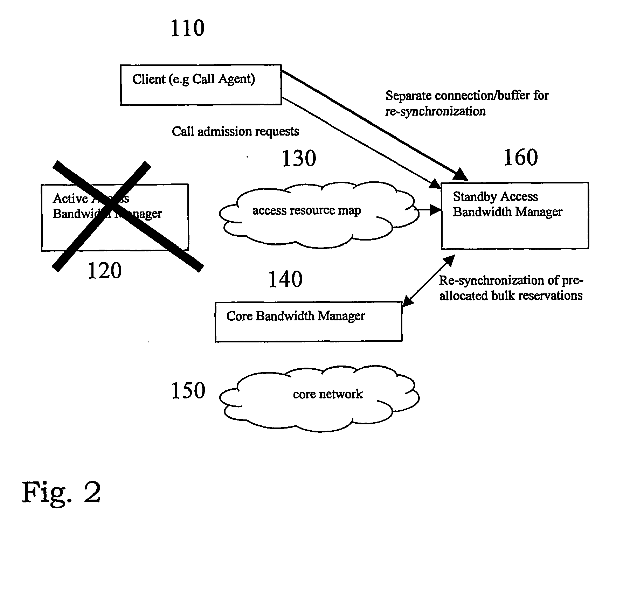

**Figure 2** illustrates the operation during fail-over to the standby access bandwidth manager according to the present invention.
**Figure 3** illustrates the transition from an old access bandwidth manager to a new access backup bandwidth manager.

### Detailed description of the invention

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

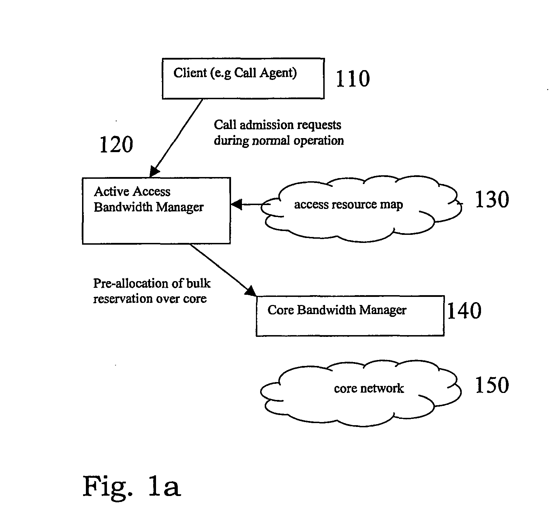

The back up bandwidth manager according to the present invention is preferably implemented in a network shown in **Figure 1a. Figure 1a** illustrates an active access network bandwidth manager 120 in the access network handling requests received from the client 110 (e.g. from call agents) for calls from one subscriber to another. Since end-to-end bandwidth management required for guaranteeing QoS the access bandwidth managers involved will also verify that there are enough resources across the core network 150 by requesting the core bandwidth managers 140 for bandwidth across the core network. These requests over the core network are preferably done by pre-allocating bulk bandwidth reservations between the different access networks.

The core bandwidth manager 140 need not be involved in processing bandwidth requests for individual calls since access bandwidth managers 120 can make local decisions on core bandwidth based on pre-allocation of bulk reservations across the core 150. Thus, access bandwidth managers 120 deal with high-rate/short-holding-time reservations while the core bandwidth manager 140 deals with low-rate/long-holding-time bulk reservations.

Notice that the concept of two-tier architecture can be applied in many different levels and locations and the solution according to the present invention is applicable in such configurations also. A two-tier architecture can for example be applied within an access network for access network scalability reasons when the bottom tier within the access is represented by an access bandwidth manager that keeps the access network resource map while the top tier of access bandwidth managers receives the call admission requests and pre-allocates resources with the bottom-tier access bandwidth manager that in turn pre-allocates resources with the core bandwidth manager. In this case the solution according to the present invention applies to at least the access bandwidth managers. In very large access topologies even the top tier access bandwidth managers may keep the resource map for parts of the access network.

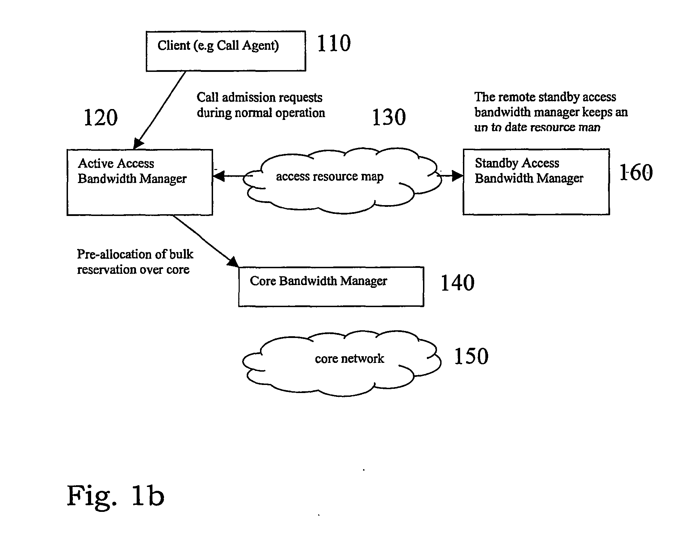

The object of the present invention is achieved by providing a geographical bandwidth manager resilience that is based on that each access network bandwidth manager has one or more backups, denoted back up access network bandwidth manager, located in other locations. The backup access network bandwidth manager is illustrated in **figure 1****b.** **Figure 1b** is identical to **figure 1a****,** except for the added backup access network bandwidth manager 160. The backup access network bandwidth manager 160 maintains a copy of the network resource map (capacity allocation map) 130 of the bandwidth manager 120 it is backing up and comprises means for synchronising states with a core network bandwidth manager. It should be noted that the backup access network bandwidth manager is not updated on the current state of accepted bandwidth reservations or pre-allocations across the core network. Both active 120 and backup access network bandwidth managers 160 are continuously updated on changes in the resource map 130, which contains information on the current topology and amount of resources provisioned (i.e., layer2, routing and MPLS). Fail-over from an active to a backup access network bandwidth manager is either performed by IP takeover, where the IP address of an unreachable bandwidth manager is taken over by its backup as the routing protocol in use announce the new route to this IP address or by configuring the clients with a primary and secondary address.

In case of a fail-over from an active access network bandwidth manager to a back-up access network bandwidth manager, a huge number of states have to be synchronised for a full synchronization of state between the bandwidth managers. Assuming that an access network bandwidth manager can handle a call rate of up to 1000 calls/second an average call duration of 120 seconds gives up to 120 000 active calls. This amount of data is almost impossible to synchronize if the fail-over time must be short and the service is on hold until the synchronization is complete.

Thus, the object of the present invention is further achieved by providing resilience of access network bandwidth managers that is implemented by minimising the amount of states that needs to be transferred upon a geographical fail-over. This minimising is accomplished thanks to that bulk bandwidth is automatically pre-allocated from the core network, by means of synchronization (auditing) between the access network and the core network bandwidth managers and that flexible re-synchronization of already admitted calls is allowed i.e. the re-synchronization of resources with other bandwidth managers are synchronised by using the pre-allocation of bulk resources from the core network. Synchronization (auditing) between bandwidth managers can be performed either by:
- Pull: the access network bandwidth manager requesting the resource allocation state from the core network manager (e.g. the core network bandwidth manager).
- Push: the core network bandwidth manager sends the resource allocation state upon failover.
- Re-allocation: the resource allocation state in the core network bandwidth manager is reset and re-allocated by the access network bandwidth manager.

The pre-allocation of bandwidth provides continuous per-call end-to-end service availability in the access network bandwidth managers even during temporary outage of the core network bandwidth manager. Pre-allocation of bulk bandwidth also lowers the signalling on the core network bandwidth managers.

Thus, the present invention enables fast fail-over from one access network bandwidth manager to a backup access network bandwidth manager by minimizing the state that has to be synchronised before the service is available on the backup access network bandwidth manager as stated above. Since the backup access network bandwidth manager is updated with the network resource map there are mainly two sources of state that need to be synchronized:
- The pre-allocated resources across the bottom tier of the network (e.g. the core network and thus the core resource state) and
- the already admitted and active calls (call state).

Since the pre-allocated resources across the core network are bulk reservations the number of reservations to synchronize with the core network bandwidth manager is minimized. The number of active calls can however be substantial amount of state that needs to be synchronised.

According to a preferred embodiment of the present invention, the call state synchronization is made optional by introducing a separate connection or a buffer between the client (e.g. call agent) and the backup access network bandwidth manager where the client can send call state synchronization in parallel with normal operation.

This preferred embodiment makes it possible to ensure synchronization for long-lived calls, while a large number of short calls may terminate before re-synchronization is complete.

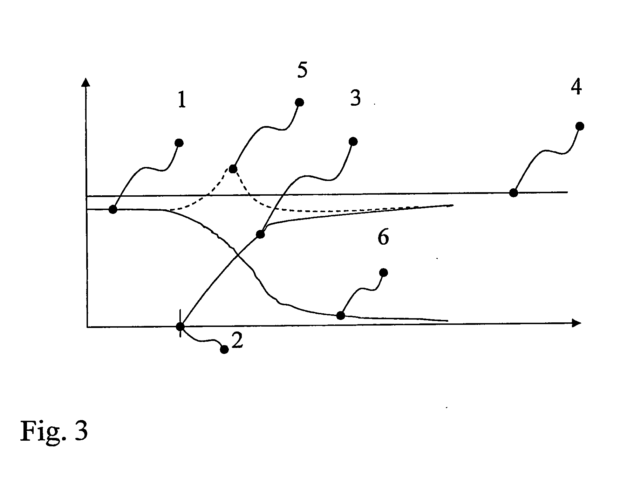

This strategy relies on a relatively low block-rate so that the risk of over-subscription of the service, i.e. admitting more calls than what is provisioned for the service, is low and that some unfairness, as to preempting admitted calls before new calls in some cases, are acceptable. For a voice service with relatively short average call duration the old call state will time out and the new state (from new calls) will build up within a relatively short time frame. During this transition there is a risk of over-subscription of the service since after the fail-over it will take some time for the new access network bandwidth manager to build up the state of active calls and those calls still active that has not been resynchronized will not be accounted. During this period the new backup bandwidth manager may admit more calls than it should, simply because there are some active calls it does not know yet. However, this risk can be reduced by using smart re-synchronization. The transition from an old access network bandwidth manager to a new backup access network bandwidth manager is illustrated in **figure 3****,** wherein
1. denotes the old call state. This is the amount of reserved resources at one point in the resource map.
2. denotes the time of a failover. At this point the failover begins and the old call state will begin to time out while the new call state (3) starts building up.
3. denotes the new call state. This is the new call state that is building up in the back-up access network bandwidth manager.
4. denotes the available resources for the current service. This is either local resources provisioned in the resource map of the access network bandwidth manager or acquired resources pre-allocated in the core network bandwidth manager, which is synchronized with the core network bandwidth manager directly after the failover.
5. denotes the potential over-subscription. During a short period of the call-state migration the new top tier bandwidth manager may admit more calls than what is provisioned according to (4).
6. denotes long term calls. These may need to be synchronized from the clients to be migrated to speed up the complete recovery of the call state.

By using the separate resubmission connection (or buffer management) according to the preferred embodiment, the clients/call agents, are allowed to implement different fail-over strategies depending on the requirements. Examples of such strategies are:
- Complete full synchronization before dealing with new call attempts, however high priority calls are always dealt with first. To achieve short fail-over times by using this strategy requires more computing power relative to the others while it implements the best fairness to already admitted calls.
- Deal with synchronization in parallel with new call attempts. In this way, new call attempts will be dealt with directly while already admitted calls are refreshed at a slower timescale which implies that they run an increased risk of being pre-empted before a new call. That depends on that the new bandwidth manager is not aware of an already admitted call before a refresh of the already admitted call is performed, which results in that the bandwidth manager may admit too many new calls. Thus the already admitted call may be pre-empted once the refresh of that already admitted call is performed unless overbooking is accepted. Since re-synchronization after fail-over is the performance bottleneck of the access network bandwidth manager, the ability of call agents to refresh reservations for active calls according to this example provides minimum response-time for new calls during fail-over.

Skip synchronization: This strategy allows call agents to deal with new calls directly. The assumption is that a majority of the already admitted calls will time-out within a reasonably short timeframe. New call state will build up from new calls only. During the transition period there is increased risk of over-subscription of bandwidth as mentioned above. This risk depends on the call blocking rate at the time of fail-over. According to a further preferred embodiment of the present invention, a refresh scheme is introduced where active calls are refreshed periodically in order to reduce the peak load during resynchronization (i.e. refreshing). In this way the load will be spread over a longer time-frame and short/soon-to-time-out calls will be excluded automatically from the re-synchronization.

Thus the present invention relates to a back up access network bandwidth manager and an IP network. I.e., the back up access network bandwidth manager according to the present invention is adapted to back up an access network bandwidth manager upon fail-over of the access network bandwidth manager in an IP network, wherein said IP network comprises the access network bandwidth manager comprising a resource map and that is adapted to pre-allocate resources in bulk from a core network of said IP network via a core network bandwidth manager also located in said IP network. As stated above a bandwidth manager is an entity that is adapted to perform admission control. The bandwidth manager may be implemented by a computer program product. Such a computer program product may be directly loadable into a processing means in a computer, comprising the software code means for performing a copy of the resource map of the access network bandwidth manager which the back up access network bandwidth manager is backing up and software code means for synchronising states with the core network bandwidth manager upon fail-over of the access network bandwidth manager.

The computer program product may be stored on a computer usable medium, comprising readable program for causing a processing means in a node B, to control the execution of the steps of performing a copy of the resource map of the access network bandwidth manager which the back up access network bandwidth manager is backing up and software code means for synchronising states with the core network bandwidth manager upon fail-over of the access network bandwidth manager.

The present invention also addresses an IP network wherein the back up access network bandwidth manager is adapted to operate. The IP network comprises an access network bandwidth manager comprising a resource map and being adapted to pre-allocate resources in bulk from a core network of said IP network via a core network bandwidth manager also located in said IP network, the IP network comprises further a back up access network bandwidth manager adapted to back up the access network bandwidth manager upon fail-over of the access network bandwidth manager.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A back up access network bandwidth manager (160) adapted to back up an access network bandwidth manager (120) upon fail-over of the access network bandwidth manager (120) in an Internet Protocol network, wherein said Internet Protocol network comprises the access network bandwidth manager (120) comprising a resource map (130) and being adapted to pre-allocate resources in bulk from a core network of said Internet Protocol network (150) via a core network bandwidth manager (140) also located in said Internet Protocol network, the back up access network bandwidth manager (160) is **characterised in that** it comprises a copy of the resource map (130) of the access network bandwidth manager (120) which it is backing up and means for synchronising states with the core network bandwidth manager upon fail-over of the access network bandwidth manager.

2. The back up access network bandwidth manager (160) according to claim 1, **characterised in that** it comprises means for performing fail-over from a failed access network bandwidth manager by Internet Protocol address takeover, wherein the backup access network bandwidth manager comprises means for taking over the Internet Protocol address of said failed access network bandwidth manager as the routing protocol in use announce the new route to this Internet Protocol address.

3. The back up access network bandwidth manager (160) according to claim 1, **characterised in that** it comprises means for performing fail-over from a failed access network bandwidth manager by configuring the clients with a primary and a secondary address.

4. The back up access network bandwidth manager (160) according to any of claims 1-3, **characterised in that** one of the states to be synchronised is the already admitted and active calls call.

5. The back up access network bandwidth manager (160) according to any of claims 1-3, **characterised in that** one of the states to be synchronised is the pre-allocated bulk resources.

6. The back up access network bandwidth manager (160) according to any of claims 1-5, **characterised in that** it comprises a separate connection or a buffer to a client wherein the separate connection or the buffer is adapted to transfer call state synchronization in parallel with normal operation.

7. The back up access network bandwidth manager (160) according to claim 6, **characterised by** means for handling new calls immediately while already admitted calls are refreshed at a slower timescale.

8. The back up access network bandwidth manager (160) according to claim 6, **characterised by** means for completing full synchronization before dealing with new call attempts.

9. The back up access network bandwidth manager (160) according to claim 6, **characterised by** means for skipping synchronization.

10. The back up access network bandwidth manager (160) according to claim 6, **characterised by** means for re-freshing active calls periodically.

11. An Internet Protocol network comprising an access network bandwidth manager (120) comprising a resource map (130) and being adapted to pre-allocate resources in bulk from a core network of said Internet Protocol network (150) via a core network bandwidth manager (140) also located in said Internet Protocol network, the Internet Protocol network comprises further a back up access network bandwidth manager adapted to back up the access network bandwidth manager (120) upon fail-over of the access network bandwidth manager (120), **characterised in that** the back up access network bandwidth manager comprises a copy of the resource map (130) of the access network bandwidth manager (120) which it is backing up and means for synchronising states with the core network bandwidth manager upon fail-over of the access network bandwidth manager.

12. The network according to claim 11, **characterised in that** it comprises means for performing fail-over from a failed access network bandwidth manager by Internet Protocol address takeover, wherein the backup access network bandwidth manager comprises means for taking over the Internet Protocol address of said failed access network bandwidth manager as the routing protocol in use announce the new route to this Internet Protocol address.

13. The network according to claim 11, **characterised in that** it comprises means for performing fail-over from a failed access network bandwidth manager by configuring the clients with a primary and a secondary address.

14. The network according to any of claims 11-13, **characterised in that** one of the states to be synchronised is the already admitted and active calls call.

15. The network according to any of claims 11-13, **characterised in that** one of the states to be synchronised is the pre-allocated bulk resources.

16. The network according to any of claims 11-15, **characterised in that** the back up access network bandwidth manager comprises a separate connection or a buffer to a client wherein the separate connection or the buffer is adapted to transfer call state synchronization in parallel with normal operation.

17. The network according to claim 16, **characterised by** means for handling new calls immediately while already admitted calls are refreshed at a slower timescale.

18. The network according to claim 17, **characterised by** means for completing full synchronization before dealing with new call attempts.

19. The network according to claim 17, **characterised by** means for skipping synchronization.

20. The network according to claim 17, **characterised by** means for re-freshing active calls periodically.

## Patentansprüche

1. Unterstützungszugangsnetzbandbreiten-Manager (160), der dazu angepasst ist, einen Zugangsnetzbandbreiten-Manager (120) bei einer Ausfallsicherung des Zugangsnetzbandbreiten-Managers (120) in ein Internetprotokoll-Netz zu unterstützen, wobei das Internetprotokoll-Netz den Zugangsnetzbandbreiten-Manager (120) umfasst, der ein Ressourcenverzeichnis (130) umfasst und dazu angepasst ist, Ressourcen aus einem Kernnetz des Internetprotokoll-Netzes (150) vorab über einen auch im Internetprotokoll-Netz angeordneten Kernnetzbandbreiten-Manager (140) paketweise zuzuteilen, wobei der Unterstützungszugangsnetzbandbreiten-Manager (160) **dadurch gekennzeichnet ist, dass** er eine Kopie des Ressourcenverzeichnisses (130) des Zugangsnetzbandbreiten-Managers (120), den er unterstützt, und Mittel, um Zustände mit dem Kernnetzbandbreiten-Manager bei der Ausfallsicherung des Zugangsnetzbandbreiten-Managers zu synchronisieren, umfasst.

2. Unterstützungszugangsnetzbandbreiten-Manager (160) nach Anspruch 1, **dadurch gekennzeichnet, dass** er Mittel umfasst, um eine Ausfallsicherung von einem ausgefallenen Zugangsnetzbandbreiten-Manager durch Internetprotokoll-Adressenübernahme durchzuführen, wobei der Unterstützungszugangsnetzbandbreiten-Manager Mittel umfasst, um die Internetprotokoll-Adresse des ausgefallenen Zugangsnetzbandbreiten-Managers zu übernehmen, wenn das verwendete Routing-Protokoll dieser Internetprotokolladresse die neue Route ankündigt.

3. Unterstützungszugangsnetzbandbreiten-Manager (160) nach Anspruch 1, **dadurch gekennzeichnet, dass** er Mittel umfasst, um eine Ausfallsicherung von einem ausgefallenen Zugangsnetzbandbreiten-Manager durchzuführen, indem die Clients mit einer primären und einer sekundären Adresse konfiguriert werden.

4. Unterstützungszugangsnetzbandbreiten-Manager (160) nach einem der Ansprüche 1 bis 3, **dadurch gekennzeichnet, dass** es sich bei einem der zu synchronisierenden Zustände um den Aufruf bereits zugelassener und aktiver Anrufe handelt.

5. Unterstützungszugangsnetzbandbreiten-Manager (160) nach einem der Ansprüche 1 bis 3, **dadurch gekennzeichnet, dass** es sich bei einem der zu synchronisierenden Zustände um die vorab zugeteilten Paketressourcen handelt.

6. Unterstützungszugangsnetzbandbreiten-Manager (160) nach einem der Ansprüche 1 bis 5, **dadurch gekennzeichnet, dass** er eine separate Verbindung oder einen Puffer zu einem Client umfasst, wobei die separate Verbindung oder der Puffer dazu angepasst ist, eine Rufzustandssynchronisation parallel zum Normalbetrieb zu übertragen.

7. Unterstützungszugangsnetzbandbreiten-Manager (160) nach Anspruch 6, **gekennzeichnet durch** Mittel, um neue Anrufe unmittelbar abzuwickeln, während bereits zugelassene Anrufe auf einer langsameren Zeitskala aufgefrischt werden.

8. Unterstützungszugangsnetzbandbreiten-Manager (160) nach Anspruch 6, **gekennzeichnet durch** Mittel, um eine Vollsynchronisation abzuschließen, bevor neue Anrufversuche behandelt werden.

9. Unterstützungszugangsnetzbandbreiten-Manager (160) nach Anspruch 6, **gekennzeichnet durch** Mittel, um eine Synchronisation zu überspringen.

10. Unterstützungszugangsnetzbandbreiten-Manager (160) nach Anspruch 6, **gekennzeichnet durch** Mittel, um periodisch aktive Anrufe aufzufrischen.

11. Internetprotokoll-Netz, einen zugangsnetzbandbreiten-Manager (120) umfassend, der ein Ressourcenverzeichnis (130) umfasst und dazu angepasst ist, Ressourcen aus einem Kernnetz des Internetprotokoll-Netzes (150) vorab über einen auch im Internetprotokoll-Netz angeordneten Kernnetzbandbreiten-Manager (140) paketweise zuzuteilen, wobei das Internetprotokoll-Netz darüber hinaus einen Unterstützungszugangsnetzbandbreiten-Manager (160) umfasst, der dazu angepasst ist, den Zugangsnetzbandbreiten-Manager (120) bei einer Ausfallsicherung des Zugangsnetzbandbreiten-Managers (120) zu unterstützen, dadurch gekenntzeichnet, dass der Unterstützungszugangsnetzbandbreiten-Manager eine Kopie des Ressourcenverzeichnisses (130) des Zugangsnetzbandbreiten-Managers (120), den er unterstützt, und Mittel, um Zustände mit dem Kernnetzbandbreiten-Manager bei der Ausfallsicherung des Zugangsnetzbandbreiten-Managers zu synchronisieren, umfasst.

12. Netz nach Anspruch 11, **dadurch gekennzeichnet, dass** es Mittel umfasst, um eine Ausfallsicherung von einem ausgefallenen Zugangsnetzbandbreiten-Manager durch Internetprotokoll-Adressenübernahme durchzuführen, wobei der Unterstützungszugangsnetzbandbreiten-Manager Mittel umfasst, um die Internetprotokoll-Adresse des ausgefallenen Zugangsnetzbandbreiten-Managers zu übernehmen, wenn das verwendete Routing-Protokoll dieser Internetprotokolladresse die neue Route ankündigt.

13. Netz nach Anspruch 11, **dadurch gekennzeichnet, dass** es Mittel umfasst, um eine Ausfallsicherung von einem ausgefallenen Zugangsnetzbandbreiten-Manager durchzuführen, indem die Clients mit einer primären und einer sekundären Adresse konfiguriert werden.

14. Netz nach einem der Ansprüche 11 bis 13, **dadurch gekennzeichnet, dass** es sich bei einem der zu synchronisierenden Zustände um den Aufruf bereits zugelassener und aktiver Anrufe handelt.

15. Netz nach einem der Ansprüche 11 bis 13, **dadurch gekennzeichnet, dass** es sich bei einem der zu synchronisierenden Zustände um die vorab zugeteilten Paketressourcen handelt.

16. Netz nach einem der Ansprüche 11 bis 15, **dadurch gekennzeichnet, dass** der Unterstützungszugangsnetzbandbreiten-Manager eine separate Verbindung oder einen Puffer zu einem Client umfasst, wobei die separate Verbindung oder der Puffer dazu angepasst ist, eine Rufzustandssynchronisation parallel zum Normalbetrieb zu übertragen.

17. Netz nach Anspruch 16, **gekennzeichnet durch** Mittel, um neue Anrufe unmittelbar abzuwickeln, während bereits zugelassene Anrufe auf einer langsameren Zeitskala aufgefrischt werden.

18. Netz nach Anspruch 17, **gekennzeichnet durch** Mittel, um eine Vollsynchronisation abzuschließen, bevor neue Anrufversuche behandelt werden.

19. Netz nach Anspruch 17, **gekennzeichnet durch** Mittel, um eine Synchronisation zu überspringen.

20. Netz nach Anspruch 17, **gekennzeichnet durch** Mittel, um periodisch aktive Anrufe aufzufrischen.

## Revendications

1. Gestionnaire de largeur de bande de réseau d'accès de secours (160) apte à secourir un gestionnaire de largeur de bande de réseau d'accès (120) en cas de basculement du gestionnaire de largeur de bande de réseau d'accès (120) dans un réseau à protocole Internet, où ledit réseau à protocole Internet comprend le gestionnaire de largeur de bande de réseau d'accès (120) comprenant une carte de ressources (130) et étant apte à préallouer des ressources en vrac à partir d'un réseau central dudit réseau à protocole Internet (150) via un gestionnaire de largeur de bande de réseau central (140) également situé dans ledit réseau à protocole Internet, le gestionnaire de largeur de bande de réseau d'accès de secours (160) étant **caractérisé en ce qu'**il comprend une copie de la carte de ressources (130) du gestionnaire de largeur de bande de réseau d'accès (120) qu'il secourt et des moyens de synchroniser des états avec le gestionnaire de largeur de bande de réseau central en cas de basculement du gestionnaire de largeur de bande de réseau d'accès.

2. Le gestionnaire de largeur de bande de réseau d'accès de secours (160) selon la revendication 1, **caractérisé en ce qu'**il comprend des moyens d'effectuer un basculement à partir d'un gestionnaire de largeur de bande de réseau d'accès défaillant par reprise d'adresse de protocole Internet, où le gestionnaire de largeur de bande de réseau d'accès de secours comprend des moyens de reprendre l'adresse de protocole Internet dudit gestionnaire de largeur de bande de réseau d'accès défaillant tandis que le protocole de routage utilisé signale la nouvelle route à cette adresse de protocole Internet.

3. Le gestionnaire de largeur de bande de réseau d'accès de secours (160) selon la revendication 1, **caractérisé en ce qu'**il comprend des moyens d'effectuer un basculement à partir d'un gestionnaire de largeur de bande de réseau d'accès défaillant en configurant les clients avec une adresse primaire et une adresse secondaire.

4. Le gestionnaire de largeur de bande de réseau d'accès de secours (160) selon l'une quelconque des revendications 1 à 3, **caractérisé en ce que** l'un des états à synchroniser est l'appel d'appels déjà admis et actifs.

5. Le gestionnaire de largeur de bande de réseau d'accès de secours (160) selon l'une quelconque des revendications 1 à 3, **caractérisé en ce que** l'un des états à synchroniser est constitué par les ressources en vrac préallouées.

6. Le gestionnaire de largeur de bande de réseau d'accès de secours (160) selon l'une quelconque des revendications 1 à 5, **caractérisé en ce qu'**il comprend une connexion séparée ou un organe tampon vers un client, la connexion séparée ou l'organe tampon étant apte à transférer une synchronisation d'état d'appel parallèlement au fonctionnement normal.

7. Le gestionnaire de largeur de bande de réseau d'accès de secours (160) selon la revendication 6, **caractérisé par** des moyens de gérer immédiatement de nouveaux appels pendant que des appels déjà admis sont rafraîchis à une échelle de temps plus lente.

8. Le gestionnaire de largeur de bande de réseau d'accès de secours (160) selon la revendication 6, **caractérisé par** des moyens de terminer une synchronisation totale avant de traiter de nouvelles tentatives d'appel.

9. Le gestionnaire de largeur de bande de réseau d'accès de secours (160) selon la revendication 6, **caractérisé par** des moyens de sauter la synchronisation.

10. Le gestionnaire de largeur de bande de réseau d'accès de secours (160) selon la revendication 6, **caractérisé par** des moyens de rafraîchir périodiquement des appels actifs.

11. Réseau à protocole Internet comprenant un gestionnaire de largeur de bande de réseau d'accès (120) comprenant une carte de ressources (130) et étant apte à préallouer des ressources en vrac à partir d'un réseau central dudit réseau à protocole Internet (150) via un gestionnaire de largeur de bande de réseau central (140) également situé dans ledit réseau à protocole Internet, le réseau à protocole Internet comprenant en outre un gestionnaire de largeur de bande de réseau d'accès de secours apte à secourir le gestionnaire de largeur de bande de réseau d'accès (120) en cas de basculement du gestionnaire de largeur de bande de réseau d'accès (120), **caractérisé en ce que** le gestionnaire de largeur de bande de réseau d'accès de secours comprend une copie de la carte de ressources (130) du gestionnaire de largeur de bande de réseau d'accès (120) qu'il secourt et des moyens de synchroniser des états avec le gestionnaire de largeur de bande de réseau central en cas de basculement du gestionnaire de largeur de bande de réseau d'accès.

12. Le réseau selon la revendication 11, **caractérisé en ce qu'**il comprend des moyens d'effectuer un basculement à partir d'un gestionnaire de largeur de bande de réseau d'accès défaillant par reprise d'adresse de protocole Internet, où le gestionnaire de largeur de bande de réseau d'accès de secours comprend des moyens de reprendre l'adresse de protocole Internet dudit gestionnaire de largeur de bande de réseau d'accès défaillant tandis que le protocole de routage utilisé signale la nouvelle route à cette adresse de protocole Internet.

13. Le réseau selon la revendication 11, **caractérisé en ce qu'**il comprend des moyens d'effectuer un basculement à partir d'un gestionnaire de largeur de bande de réseau d'accès défaillant en configurant les clients avec une adresse primaire et une adresse secondaire.

14. Le réseau selon l'une quelconque des revendications 11 à 13, **caractérisé en ce que** l'un des états à synchroniser est l'appel d'appels déjà admis et actifs.

15. Le réseau selon l'une quelconque des revendications 11 à 13, **caractérisé en ce que** l'un des états à synchroniser est constitué par les ressources en vrac préallouées.

16. Le réseau selon l'une quelconque des revendications 11 à 15, **caractérisé en ce que** le gestionnaire de largeur de bande de réseau d'accès de secours comprend une connexion séparée ou un organe tampon vers un client, la connexion séparée ou l'organe tampon étant apte à transférer une synchronisation d'état d'appel parallèlement au fonctionnement normal.

17. Le réseau selon la revendication 16, **caractérisé par** des moyens de gérer de nouveaux appels immédiatement pendant que des appels déjà admis sont rafraîchis à une échelle de temps plus lente.

18. Le réseau selon la revendication 17, **caractérisé par** des moyens de terminer une synchronisation totale avant de traiter de nouvelles tentatives d'appel.

19. Le réseau selon la revendication 17, **caractérisé par** des moyens de sauter la synchronisation.

20. Le réseau selon la revendication 17, **caractérisé par** des moyens de rafraîchir périodiquement des appels actifs.
